# EUROPEAN PATENT APPLICATION

(11) **EP 3 843 025 A1**
(43) Date of publication of application: **30.06.2021**
(21) Application number: 19851143.8
(22) Date of filing: 20.08.2019
(51) Int. Cl.: G06Q 30/06

(54) **FRAGRANCE PRESENTATION INFORMATION OUTPUT SYSTEM**

(30) Priority: 22.08.2018 JP 2018155667
(71) Applicant: DAIKIN INDUSTRIES, LTD., Osaka 530-8323 (JP)
(72) Inventor: MAEDA, Toshiyuki, Osaka 530-8323 (JP); OHTA, Yuu, Osaka 530-8323 (JP)
(74) Representative: Conti, Marco
(86) International application number: PCT/JP2019/032463
(87) International publication number: WO 2020/040144

(57) **Abstract**

An appropriate scent is provided to a user. A scent-presentation-information output system (100) includes a scent-provision-information storage unit (101), a scent-provision-information acquisition unit (102), a clustering unit (103), a scent-presentation-information generation unit (104), and a scent-presentation-information output unit (105). The scent-provision-information storage unit (101) stores, as scent provision information (J), scent identification information (J01) for identifying a scent provided to a user (5), scent evaluation information (J02) indicating an evaluation of the scent by the user (5), and user identification information (J03) for identifying the user (5) in association with one another. The clustering unit (103) classifies, based on the scent provision information (J), the user (5) into a predetermined cluster. The scent-presentation-information generation unit (104) generates, based on pieces of scent provision information (J) of all or other users belonging to the cluster, scent presentation information for presenting a scent recommended to the user (5). The scent-presentation-information output unit (105) outputs the scent presentation information in a form suitable for an output destination.

## Description

### Technical Field

The present disclosure relates to a scent-presentation-information output system.

### Background Art

In the related art, systems for generating a scent that provides a desired effect are under study. For example, PTL 1 (Japanese Unexamined Patent Application Publication No. 2017-33226) discloses a scent generation apparatus that generates an appropriate scent according to a situation of a user.

### Summary of Invention

### Technical Problem

However, characteristics of a human nose are extremely fluid. Even when a person thinks that the person has selected an appropriate scent at a certain time point, the person may feel that the person has selected a wrong scent at the next time point.

### Solution to Problem

A scent-presentation-information output system according to a first aspect includes a scent-provision-information storage unit, a scent-provision-information acquisition unit, a clustering unit, a scent-presentation-information generation unit, and a scent-presentation-information output unit. The scent-provision-information storage unit stores, as scent provision information, scent identification information for identifying a scent provided to a user, scent evaluation information indicating an evaluation of the scent by the user, and user identification information for identifying the user in association with one another. The scent-provision-information acquisition unit acquires the scent provision information. The clustering unit classifies, based on the scent provision information, the user into a predetermined cluster. The scent-presentation-information generation unit generates, based on pieces of scent provision information of all or other users who belong to the cluster, scent presentation information for presenting a scent recommended to the user. The scent-presentation-information output unit outputs the scent presentation information in a form suitable for an output destination. Such a configuration causes the scent presentation information in which pieces of scent provision information of users belonging to the cluster are reflected to be output and thus enables an appropriate scent to be provided to the user.

A scent-presentation-information output system according to a second aspect is the scent-presentation-information output system according to the first aspect, in which the scent evaluation information includes first evaluation information. The scent-presentation-information output system further includes a provision duration acquisition unit and a first-evaluation-information generation unit. The provision duration acquisition unit acquires a provision duration for which the scent is provided. The first-evaluation-information generation unit generates, based on the provision duration, the first evaluation information included in the scent evaluation information. Such a configuration enables clustering to be performed on a user based on the provision duration for which the scent is provided.

A scent-presentation-information output system according to a third aspect is the scent-presentation-information output system according to the first aspect or the second aspect, further including a provision duration acquisition unit that acquires a provision duration for which the scent is provided. The clustering unit classifies, based on the provision duration, the user into a predetermined cluster. Such a configuration enables the scent presentation information to be output based on the cluster of users having similar time response characteristics of the olfactory organ.

A scent-presentation-information output system according to a fourth aspect is the scent-presentation-information output system according to any of the first aspect to third aspect, in which the scent presentation information includes a recommended use duration of the scent recommended to the user. This can prompts the user to appropriately use the scent.

A scent-presentation-information output system according to a fifth aspect is the scent-presentation-information output system according to any of the first aspect to the fourth aspect, further including a scent-change-information extraction unit. The scent-change-information extraction unit extracts, from the scent-provision-information storage unit, based on the scent identification information and the user identification information, scent change information indicating a change in the scent provided to the user in a continuous time series. The clustering unit classifies, based on the scent change information, the user into a predetermined cluster. The scent-presentation-information generation unit generates the scent presentation information including information on a change in a scent in a continuous time series. Such a configuration enables a scent preferable for the user to be presented since the user is classified based on the use history.

A scent-presentation-information output system according to a sixth aspect is the scent-presentation-information output system according to any of the first aspect to the fifth aspect that is coupled to a scent dispenser. The scent dispenser contains a plurality of fragrances and is capable of generating a scent using one fragrance or a plurality of fragrances. The scent-provision-information acquisition unit acquires, based on information transmitted from the scent dispenser, the scent provision information. Such a configuration enables various kinds of scents to be provided via the scent dispenser and enables information for outputting the scent presentation information to be acquired via the scent dispenser.

A scent-presentation-information output system according to a seventh aspect is the scent-presentation-information output system according to the sixth aspect, in which the scent dispenser includes an input reception unit that receives input of the information for generating the scent provision information. Such a configuration enables information necessary for generating the scent provision information to be acquired via the scent dispenser.

A scent-presentation-information output system according to an eighth aspect is the scent presentation information output system according to the seventh aspect, in which the scent dispenser receives input of the information for generating the scent provision information via a terminal apparatus associated with the user. Such a configuration enables information necessary for generating the scent provision information to be acquired via the terminal apparatus.

A scent-presentation-information output system according to a ninth aspect is the scent-presentation-information output system according to any of the first aspect to the eighth aspect, in which the scent evaluation information includes second evaluation information. The scent-presentation-information output system further includes a feedback information acquisition unit and a second-evaluation-information generation unit. The feedback information acquisition unit acquires feedback information indicating feedback on the scent provided to the user. The second-evaluation-information generation unit generates, based on the feedback information, the second evaluation information included in the scent evaluation information. Such a configuration enables the scent evaluation information in which the feedback information on the scent is reflected to be generated.

A scent-presentation-information output system according to a tenth aspect is the scent-presentation-information output system according to the ninth aspect, further including a reaction information reception unit that receives, from the user, input of reaction information indicating a reaction to the scent. The feedback information acquisition unit acquires the feedback information by analyzing the reaction information. Such a configuration enables the scent evaluation information in which the reaction to the scent is reflected to be generated.

A scent-presentation-information output system according to an eleventh aspect is the scent-presentation-information output system according to the tenth aspect, in which the reaction information reception unit receives a provision duration for which the scent is provided to the user. Such a configuration enables the scent evaluation information to be generated in accordance with the length of the provision duration.

A scent-presentation-information output system according to a twelfth aspect is the scent presentation information output system according to the tenth aspect or the eleventh aspect, in which the reaction information reception unit receives input of the reaction information via a terminal apparatus associated with the user. Such a configuration enables the reaction information to be input via the terminal apparatus.

A scent-presentation-information output system according to a thirteenth aspect is the scent-presentation-information output system according to any of the ninth aspect to the twelfth aspect that is coupled to a sound recording apparatus that records sound information of a space to which the scent is provided. The feedback information acquisition unit acquires the feedback information by analyzing the sound information of the space. Such a configuration enables the scent evaluation information to be generated based on a conversation or the like of the user.

A scent-presentation-information output system according to a fourteenth aspect is the scent-presentation-information output system according to any of the ninth aspect to the thirteenth aspect that is coupled to an image-capturing apparatus that captures an image of a space to which the scent is provided. The feedback information acquisition unit acquires the feedback information by analyzing a facial expression of the user depicted in the captured image of the space. Such a configuration enables the scent evaluation information to be generated based on the facial expression of the user.

A scent-presentation-information output system according to a fifteenth aspect is the scent-presentation-information output system according to any of the first aspect to the fourteenth aspect, in which the scent evaluation information includes third evaluation information. The scent-presentation-information output system further includes a sales information storage unit and a third-evaluation-information generation unit. The sales information storage unit stores sales information of a fragrance from which the scent is generated. The third-evaluation-information generation unit generates, based on the sales information, the third evaluation information included in the scent evaluation information. Such a configuration enables the scent evaluation information to be generated based on the sales information of the fragrance.

A scent-presentation-information output system according to a sixteenth aspect is the scent-presentation-information output system according to any of the first aspect to the fifteenth aspect, further including a user identification unit that identifies the user based on the user identification information. Such a configuration enables the user to whom the scent is provided to be identified.

A scent-presentation-information output system according to a seventeenth aspect is the scent-presentation-information output system according to any of the first aspect to the sixteenth aspect, in which the scent evaluation information includes fourth evaluation information. The scent-presentation-information output system further includes a use information reception unit and a fourth-evaluation-information generation unit. The use information reception unit receives, from the user, input of a use purpose of the scent and an effect for the use purpose. The fourth-evaluation-information generation unit generates, based on the use purpose and the effect, the fourth evaluation information included in the scent evaluation information. Such a configuration enables the scent evaluation information of the scent that is effective for the user according to the use purpose to be generated.

### Brief Description of Drawings

[Fig. 1] Fig. 1 is a schematic diagram illustrating a configuration of a scent-presentation-information output system 100.
[Fig. 2] Fig. 2 is a diagram illustrating an example of scent provision information J.
[Fig. 3] Fig. 3 is a diagram illustrating an example of scent change information K.
[Fig. 4] Fig. 4 is a diagram illustrating an example of sales information J20.
[Fig. 5] Fig. 5 is a flowchart illustrating an operation of the scent-presentation-information output system 100.
[Fig. 6] Fig. 6 is a schematic diagram illustrating the concept of clusters.
[Fig. 7] Fig. 7 is a schematic diagram illustrating the concept of the scent-presentation-information output system 100.
[Fig. 8] Fig. 8 is a diagram illustrating an example of a display image output to a terminal apparatus 50 of a user 5.
[Fig. 9] Fig. 9 is a diagram illustrating an example of a display image output to the terminal apparatus 50 of the user 5.

### Description of Embodiments

### (1) Configuration of Scent-Presentation-Information Output System

### (1-1) Overall Configuration

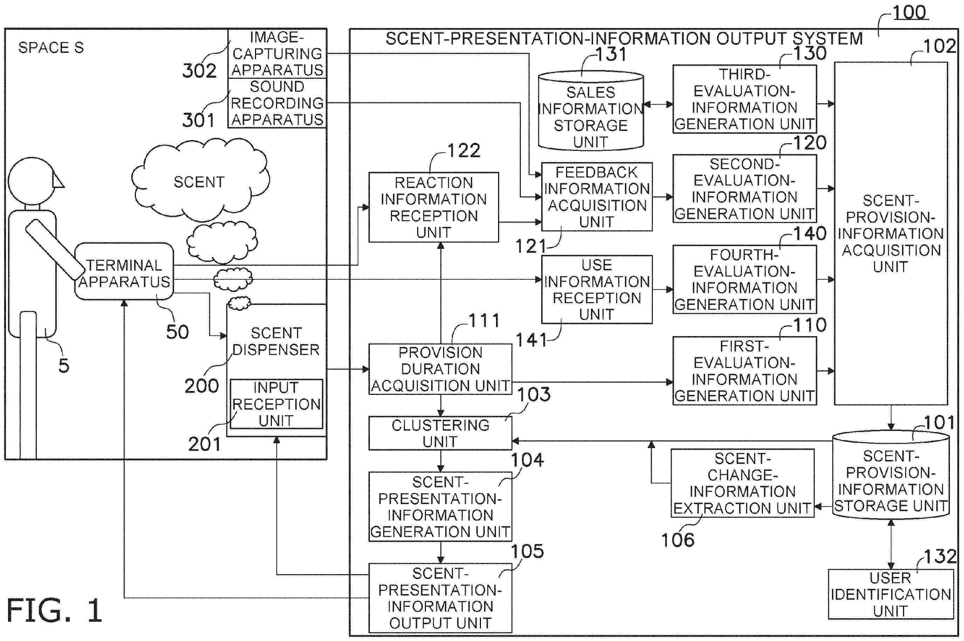

A scent-presentation-information output system 100 outputs scent presentation information regarding a scent recommended to a user 5. As illustrated in Fig. 1, the scent-presentation-information output system 100 at least includes a scent-provision-information storage unit 101, a scent-provision-information acquisition unit 102, a clustering unit 103, a scent-presentation-information generation unit 104, and a scent-presentation-information output unit 105. Further, as additional components, the scent-presentation-information output system 100 includes a first-evaluation-information generation unit 110, a provision duration acquisition unit 111, a second-evaluation-information generation unit 120, a feedback information acquisition unit 121, a reaction information reception unit 122, a third-evaluation-information generation unit 130, a sales information storage unit 131, a user identification unit 132, a fourth-evaluation-information generation unit 140, and a use information reception unit 141. Note that not all of these additional components are required. These additional components may be appropriately omitted when clustering described later can be performed with a predetermined accuracy. The scent-presentation-information output system 100 described above can be realized by any computer. An arithmetic processing unit such as a CPU reads a predetermined program, so that each of the functions described above is implemented.

The scent-presentation-information output system 100 is coupled to a scent dispenser 200 disposed in a space S. The scent dispenser 200 contains a plurality of fragrances and generates a scent using one fragrance or a plurality of fragrances. For example, fragrances are loaded in a cassette capable of containing a plurality of fragrances as a set. This cassette is incorporated into the scent dispenser 200. The scent dispenser 200 also includes an input reception unit 201 that receives input of information for generating scent provision information J described later. The scent dispenser 200 itself may include a physical input device and the input reception unit 201 receive information via this input device. Alternatively, the input reception unit 201 may receive information via a terminal apparatus 50 associated with the user 5. Note that the terminal apparatus 50 is, for example, a smartphone owned by the user 5.

Herein, the scent-presentation-information output system 100 is also coupled to at least one of a sound recording apparatus 301 or an image-capturing apparatus 302. As the sound recording apparatus 301, any sound recording apparatus can be used. The sound recording apparatus 301 records sound information of the space S to which a scent is provided. As the image-capturing apparatus 302, any image-capturing apparatus can be used. The image-capturing apparatus 302 captures an image of the space S to which a scent is provided. Note that the sound recording apparatus 301 or the image-capturing apparatus 302 are not necessarily required and may be omitted as appropriate.

### (1-2) Detailed Configuration

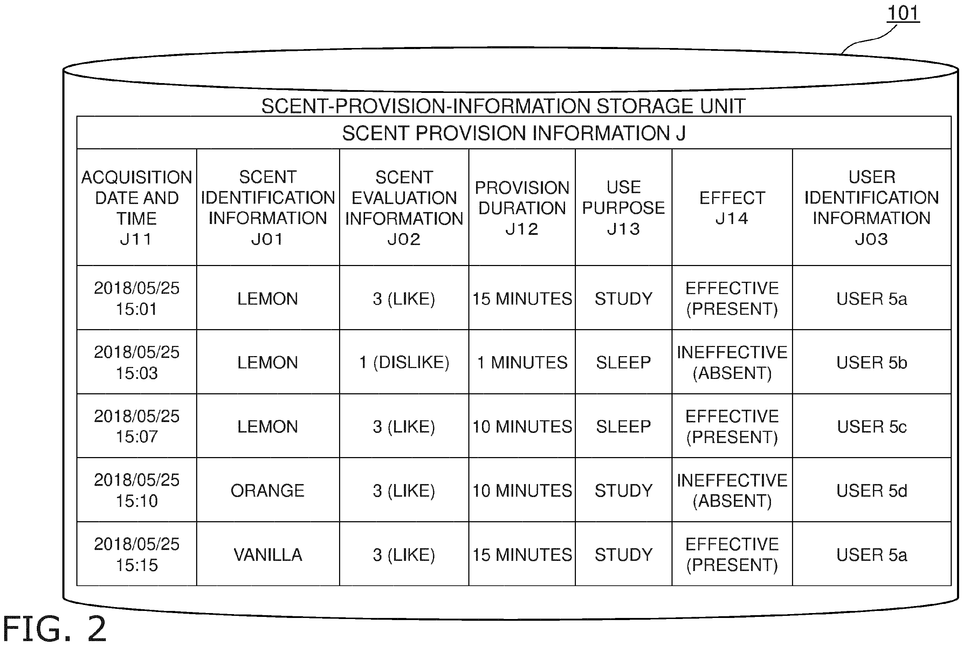

The scent-provision-information storage unit 101 is realized by a memory such as a ROM or a RAM, a hard disk, and any other storage device, and stores the scent provision information J. As illustrated in Fig. 2, the "scent provision information J" is information at least including scent identification information J01 for identifying a scent provided to the user 5, scent evaluation information J02 indicating an evaluation of the scent by the user 5, and user identification information J03 for identifying the user 5. Herein, pieces of information of an acquisition date and time J11, a provision duration J12, a use purpose J13, an effect J14 for the use purpose J13 are stored as the scent provision information J in association with one another. In the example illustrated in Fig. 2, pieces of information corresponding to "lemon", "lemon", "lemon", "orange", "vanilla", and the like are stored as the scent identification information J01 in the scent-provision-information storage unit 101 in chronological order of the acquisition date and time J11. The scent evaluation information J02 indicates an evaluation of the scent by the user 5. Herein, the scent evaluation information J02 is defined by a numerical value indicating preference, and indicates that a higher numerical value means a more preferable scent for the user. In the example illustrated in Fig. 2, pieces of information such as "3 (like)", "1 (dislike)", "3 (like)", "3 (like)", and "3 (like)" are stored as the scent evaluation information J02 in chronological order. Note that the scent evaluation information J02 includes any of or any combination of first evaluation information to fourth evaluation information described later. Fig. 2 illustrates the scent evaluation information J02 corresponding to the first evaluation information. The user identification information J03 is any information having a one-to-one correspondence to the user 5 (hereinafter, when individual users are described, lower-case letters a, b, c, d ··· are appended to the numeral 5). In the example illustrated in Fig. 2, pieces of information respectively corresponding to "user 5a", "user 5b", "user 5c", "user 5d", and "user 5a" are stored in chronological order. As the user identification information J03, not only information for identifying an individual user but also identification information of any apparatus (such as, for example, a MAC address of a smartphone) used by the user 5 may be used. The use purpose J13 is information indicating the purpose for which the user 5 uses the scent, and is set by the user 5 in advance. In the example illustrated in Fig. 2, promotion of study or sleep can be set as the use purpose, and pieces of information such as "study", "sleep", "sleep", "study", and "study" are stored in chronological order. The effect J14 indicates an evaluation given by the user 5 in terms of the use purpose J13, and is set by the user 5 after the use of the scent. In the example illustrated in Fig. 2, effective (present) or ineffective (absent) can be set as the effect, and pieces of information such as "effective", "ineffective", "effective", "ineffective", and "effective" are stored in chronological order.

The scent-provision-information acquisition unit 102 acquires the scent provision information J described above. Herein, the scent-provision-information acquisition unit 102 has a function of acquiring the scent provision information J, based on information transmitted from the scent dispenser 200.

The clustering unit 103 classifies the user 5 into a predetermined cluster, based on the scent provision information J. For example, the clustering unit 103 has a function of classifying the user 5 into a predetermined cluster, based on the provision duration J12. The clustering unit 103 also has a function of appropriately classifying the users 5, based on any of or any combination of feedback information, sales information, use information, and the like, which will be described later. The clustering unit 103 further has a function of classifying the user 5 into a predetermined cluster, based on scent change information K described later. As a clustering method, a hierarchical clustering algorithm such as the Ward's method can be employed, or a non-hierarchical clustering algorithm such as the k-means method may be employed.

The scent-presentation-information generation unit 104 generates "scent presentation information" for presenting a scent recommended to the user 5, based on the pieces of scent provision information of all or other users 5 belonging to the cluster. The scent-presentation-information generation unit 104 also has a function of generating the scent presentation information including a change in the scent in a continuous time series. Note that a technique such as collaborative filtering can be used in generation of the scent presentation information.

The scent-presentation-information output unit 105 outputs the scent presentation information in a form suitable for an output destination. The scent presentation information may include a recommended use duration of the scent recommended to the user 5. Specifically, the scent-presentation-information output unit 105 can output the scent presentation information to the terminal apparatus 50 of the user 5. In this case, for example, display information such as "The scent recommended to you is orange. The recommended use duration is 30 minutes." is output as the scent presentation information on the terminal apparatus 50 of the user 5. When a fragrance or the like of orange is already contained in the scent dispenser 200, the scent-presentation-information output unit 105 may also output, as the scent presentation information to the scent dispenser 200, control information for controlling the scent dispenser 200 to emit the scent of orange for 30 minutes under a predetermined condition.

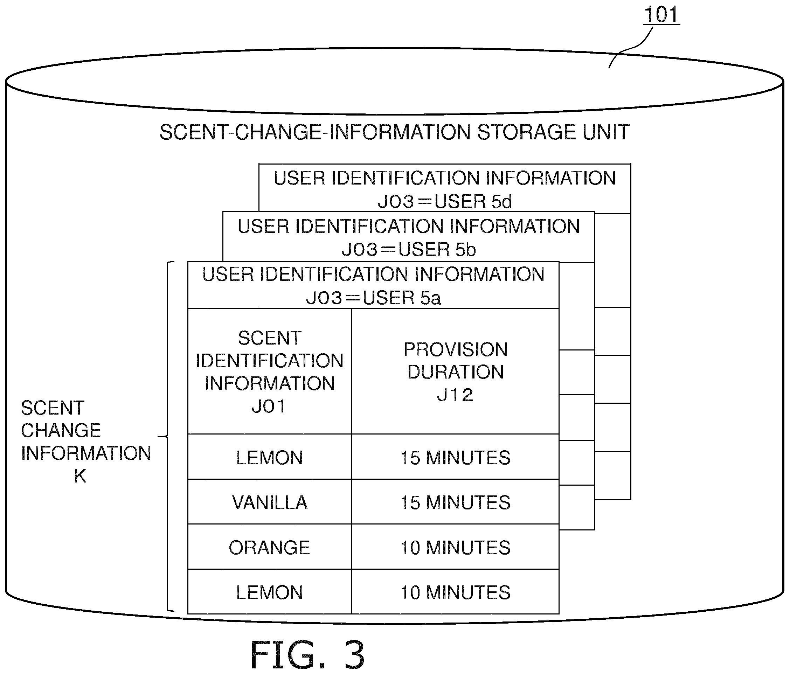

As illustrated in Fig. 3, a scent-change-information extraction unit 106 extracts, from the scent-provision-information storage unit 101, based on the scent identification information J01 and the user identification information J03, the "scent change information K" indicating a change in the scent provided to the user 5 in a continuous time series. Substantially, the scent change information H corresponds to a history of the change when the user 5 continuously uses a plurality of scents. In the example illustrated in Fig. 3, in the scent change information K, the scent identification information J01 for each of the scents "lemon", "vanilla", "orange", and "lemon" in order in which the scents are used by the user 5a is associated with the provision duration J12 indicating a corresponding one of "15 minutes", "15 minutes", "10 minutes", and "10 minutes" that are the durations for which the respective scents are used.

The first-evaluation-information generation unit 110 generates the first evaluation information, based on the provision duration J12 acquired by the provision duration acquisition unit 111. The first-evaluation-information generation unit 110 determines that the evaluation by the user 5 is high when the provision duration J12 is long, determines that the evaluation is low when the provision duration is short, and calculates a score of the first evaluation information. The criterion based on which the provision duration J12 is determined to be long or short can be changed at any timing.

The provision duration acquisition unit 111 acquires the provision duration J12 for which the scent is given to the space S via the scent dispenser 200. The acquired provision duration J12 is transmitted to at least one of the first-evaluation-information generation unit 110 or the second-evaluation-information generation unit 120.

The second-evaluation-information generation unit 120 generates second evaluation information, based on the feedback information acquired by the feedback information acquisition unit 121.

The feedback information acquisition unit 121 acquires the "feedback information" indicating feedback on the scent provided to the space S. For example, the feedback information acquisition unit 121 acquires the feedback information by analyzing reaction information acquired by the reaction information reception unit 122. Details of the reaction information will be described later. The feedback information acquisition unit 121 is not limited this, and has a function of acquiring the feedback information by analyzing sound information of the space S. For example, a specific phrase such as "good smell" is acquired as the feedback information from the sound information. In this case, the second-evaluation-information generation unit 120 regards that the user 5 likes the scent, and calculates a score of the second evaluation information so that the score for the scent is high. The feedback information acquisition unit 121 also has a function of acquiring the feedback information by analyzing a facial expression of the user 5 depicted in a captured image of the space S. For example, the fact that the user 5 is smiling is acquired as the feedback information from the captured image. In this case, the second-evaluation-information generation unit 120 regards that the user 5 likes the scent, and calculates a score of the second evaluation information so that the score for the scent is high.

The reaction information reception unit 122 receives input of reaction information indicating a reaction of the user 5 to the scent. Specifically, the reaction information reception unit 122 receives, as the reaction information, information indicating a reaction of the user 5 to the scent at the time of provision of the scent, directly from the terminal apparatus 50 associated with the user 5 or via the scent dispenser 200 capable of communicating with the terminal apparatus 50. For example, the reaction information is an icon indicating the mood of the user, such as "like", "love", or "bad", and the score for the scent is defined in accordance with these icons. The reaction information may also be calculated from a sentence such as a comment made by the user 5. In this case, the feedback information acquisition unit 121 calculates, using an algorithm that uses machine learning, the evaluation given by the user 5 for the scent provided to the space S, from an occurrence ratio of the words used in the comment. The reaction information reception unit 122 may also include the provision duration J12 acquired by the provision duration acquisition unit 111 in the reaction information. This enables the score for the reaction information to be adjusted, such as is appropriately increased or decreased, based on the provision duration J12.

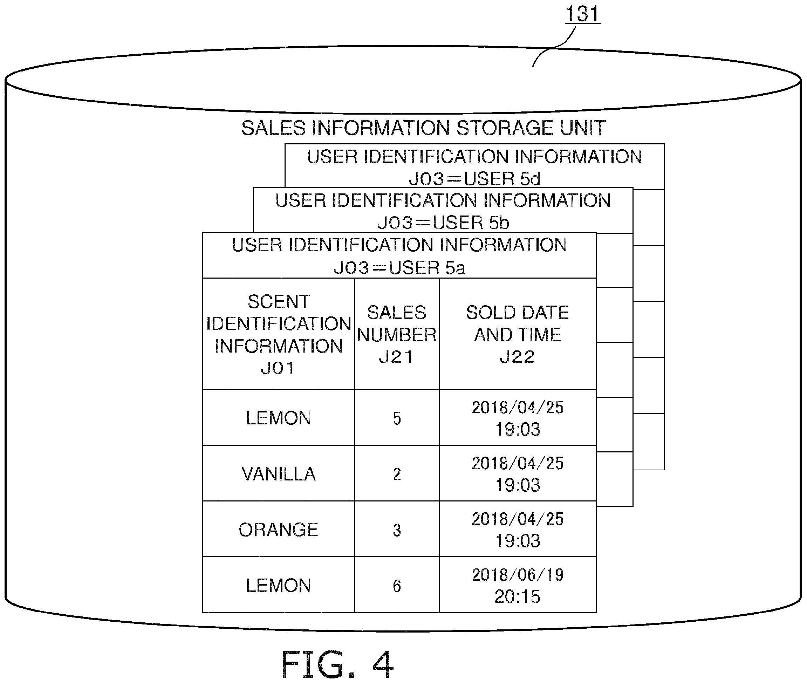

The third-evaluation-information generation unit 130 generates third evaluation information, based on the sales information stored in the sales information storage unit 131. Specifically, the third-evaluation-information generation unit 130 calculates a score of the third evaluation information so that the score for a fragrance having a large sales amount is high and the score for a fragrance having a small sales amount is low. Here, the sales information storage unit 131 is realized by a memory such as a ROM or a RAM, a hard disk, and any other storage device, and stores sales information of a fragrance from which a scent is generated. Specifically, as illustrated in Fig. 4, the sales information is information in which the user identification information J03, the scent identification information J01, a fragrance sales amount J21, and a purchase date and time J22 are associated with each other. The user 5 can be identified by the user identification unit 132, based on the user identification information J03.

The fourth-evaluation-information generation unit 140 generates the fourth evaluation information, based on the use purpose J13 and the effect J14. The use information reception unit 141 receives, as use information, input of the use purpose J13 of the scent and the effect J14 for the use purpose J13 from the user 5. Herein, as an example, the items of the use purpose J13 and the effect J14 are set in advance. The user 5 can select study or sleep as the use purpose J13 and can select effective (present) or ineffective (absent) as the effect J14. The fourth-evaluation-information generation unit 140 calculates a score of the fourth evaluation information so that the score is high when the effective is selected as the effect and the score is low when the ineffective is selected as the effect.

### (2) Operation of Scent-Presentation-Information Output System

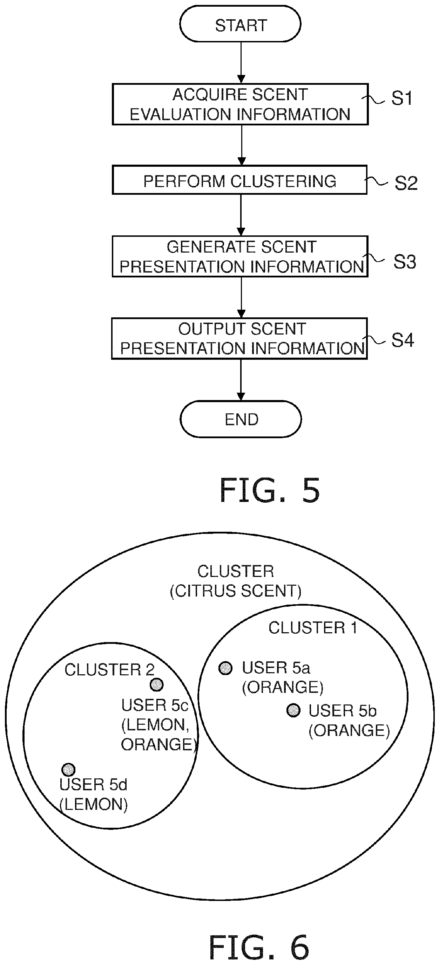

Fig. 5 is a flowchart illustrating an operation of the scent-presentation-information output system 100.

First, the scent-provision-information acquisition unit 102 acquires the scent provision information J (S1). The scent provision information J acquired by the scent-provision-information acquisition unit 102 is written to the scent-provision-information storage unit 101 at any time. Note that the scent evaluation information J02 is generated on the premises that the scent provision information J is acquired. This scent evaluation information J02 includes the first evaluation information, the second evaluation information, the third evaluation information, and the fourth evaluation information (however, Fig. 2 illustrates the first evaluation information alone as the scent evaluation information J02.).

Next, the clustering unit 103 classifies, based on the scent provision information J stored in the scent-provision-information storage unit 101, the user 5 so that the user 5 belongs to a predetermined cluster (S2). Specifically, the user is classified into a predetermined cluster in accordance with any one of or any combination of the first evaluation information, the second evaluation information, the third evaluation information, and the fourth evaluation information described above. For example, new scent evaluation information may be generated by multiplying the score or the like of the first evaluation information by the score or the like of the second evaluation information, and based on this new scent evaluation information, the user 5 may be classified into a predetermined cluster.

Subsequently, the scent-presentation-information generation unit 104 generates the scent presentation information for presenting a scent recommended to the user 5, based on the cluster to which the user 5 belongs (S3).

The scent-presentation-information output unit 105 then outputs the scent presentation information in a form suitable for an output destination (S4). For example, the scent presentation information is output as display information to the terminal apparatus 50 of the user 5. In this case, for example, a display such as "The scent recommended to you is orange. The recommended use duration is 30 minutes." is output, as the scent presentation information, on the screen of the terminal apparatus 50. The scent presentation information can also be output as control information to the scent dispenser 200 used by the user 5. In this case, the scent presentation information is output as, for example, control information for causing the scent dispenser 200 to emit the scent of orange for 30 minutes.

### (3) Features and Modifications

### (3-1)

As described above, in the scent-presentation-information output system 100, the scent-provision-information storage unit 101 stores, as the scent provision information J, the scent identification information J01 for identifying a scent provided to the user 5, the scent evaluation information J02 indicating an evaluation of the scent by the user 5, and the user identification information J03 for identifying the user 5 in association with one another. Based on the scent provision information J, the clustering unit 103 classifies the user 5 into a predetermined cluster. In addition, the scent-presentation-information generation unit 104 generates scent presentation information for presenting a scent recommended to the user 5, based on the pieces of scent provision information J of all or other users 5 belonging to the cluster. The scent-presentation-information output unit 105 then outputs the scent presentation information in a form suitable for an output destination. Such a configuration causes the scent presentation information reflecting the scent provision information J of the user 5 belonging to the cluster to be output and thus enables an appropriate scent to be provided to the user 5.

As a side note, characteristics of a human nose are extremely fluid. Thus, even a person himself or herself may be unable to appropriately determine which scent the person is fond of. Specifically, there are approximately 340 nasal receptors. Even when a person regards scents as the same scent, different receptors are sensing the scents in some cases. Therefore, the characteristics of the nose and the way the person feels the scent may differ depending on the situation. A person may make a different determination in a relatively short interval for a scent which the person determines to be preferable at a certain time point. That is, the nose has characteristics that are likely to fluctuate. Therefore, even if a person asks for an aromatherapist or the like for an advice on a good scent, the characteristics of the nose may change while the scent is searched for. Thus, it is difficult to find a good scent for the person. For example, it often occurs that, at a store selling perfumes, if a person smells a certain perfume, go around the store, and smells the perfume, the person feels the perfume as a different scent.

The scent-presentation-information output system 100 according to the present embodiment clusters users having similar preferences, and outputs information regarding a scent that is highly likely to be objectively determined to be preferable. Consequently, a scent that is highly likely to be perceived as good by the user is statistically collected, and a good scent that is not noticed by the user can be identified. In addition, a scent which a user has never tried but is likely to evaluate to be good can be identified from information on a scent which other users belonging to the same cluster have evaluated to be preferable.

For example, it is assumed that, as illustrated in Fig. 6, the users 5a, 5b, 5c, 5d belong to a cluster of a citrus scent, the users 5a and 5b belong to a cluster 1, and the users 5c and 5d belong to a cluster 2. It is also assumed that the users 5a and 5b have given high scores to the scent of orange, the user 5c has given high scores to the scents of orange and lemon, and the user 5d has never used the scent of orange and has given a high score only to the scent of lemon. In such a case, the scent presentation information in which the evaluation for the scent of orange is reflected is output to the users 5a and 5b. On the other hand, the scent presentation information in which the evaluations for the scents of orange and lemon are reflected is output to the users 5c and 5d. Here, the scent presentation information in which the scent evaluation for the scent of orange which the user 5d has never used is reflected is output to the user 5d. As a result, the scent presentation information regarding the scent which the user 5d has not noticed but is highly likely to fond of is output to the user 5d. Although the number of clusters and the number of users are simplified for convenience of description herein, any number of clusters and any number of users that enables the scent presentation information to exhibit a certain reliability are employed.

In short, the scent-presentation-information output system 100 according to the present embodiment clusters all users in accordance with the preference of the scent. Thus, with reference to information of the users who tend to fond of the same scent, the scent-presentation-information output system 100 is able to present, to each user 5, information regarding a new scent which the user 5 is highly likely to fond of.

### (3-2)

In addition, in the scent-presentation-information output system 100, the clustering unit 103 classifies the user 5 into a predetermined cluster. The clustering method can be appropriately selected. For example, based on the provision duration J12, the clustering unit 103 classifies the user 5 into a predetermined cluster. Such a configuration enables the scent presentation information to be output based on the cluster of the users 5 having similar time response characteristics of the olfactory organ. For example, based on the scent change information K, the clustering unit 103 classifies the user 5 into a predetermined cluster. Such a configuration enables information regarding a scent which is more preferable for the user 5 to be presented since the user 5 is classified based on the use history.

In the case where clustering is performed on the user 5 based on the scent change information K, the scent-change-information extraction unit 106 extracts the scent change information K from the scent-provision-information storage unit 101. Such a configuration enables information regarding a scent which the user is highly likely to fond of to be presented in consideration of the change in the way in which the user feels the scent over time.

### (3-3)

In addition, in the scent-presentation-information output system 100, the scent-presentation-information generation unit 104 outputs the scent presentation information. Here, the scent presentation information includes a recommended use duration of the scent recommended to the user 5. This can prompts the user 5 to appropriately use the scent. However, the presentation of the recommended duration is not mandatory and may be omitted as appropriate.

In addition, when clustering is performed on the user 5 based on the scent change information K, the scent-presentation-information generation unit 104 has a function of generating the scent presentation information including a change in a scent in a continuous time series. Specifically, the scent-presentation-information generation unit 104 learns a pattern of a change until the user determines that the scent is good or bad in relation to the change in the way the user feels the scent over time, and performs clustering on users who fond of the same change. Thus, the scent-presentation-information generation unit 104 can generate the scent presentation information, based on information on the users in the same cluster. Consequently, the scent-presentation-information generation unit 104 can generate, as the scent presentation information, display information such as "Please use lemon for 15 minutes, use vanilla for 5 minutes, and then use orange for 10 minutes".

### (3-4)

The scent-presentation-information output system 100 includes the first-evaluation-information generation unit 110, the second-evaluation-information generation unit 120, the third-evaluation-information generation unit 130, and the fourth-evaluation-information generation unit 140, and generates the first evaluation information, the second evaluation information, the third evaluation information, and the fourth evaluation information included in the scent evaluation information J02 indicating an evaluation of a scent by the user 5. Although all of these components are listed here, the scent-presentation-information output system 100 may include only one of these components or may include any combination of these components (Fig. 2 illustrates only the first evaluation information as the scent evaluation information J02). Based on the scent evaluation information J02, the clustering unit 103 classifies a user into a predetermined cluster.
(a) For example, when the scent-presentation-information output system 100 includes the first-evaluation-information generation unit 110, the first-evaluation-information generation unit 110 generates the first evaluation information based on the provision duration J12 acquired by the provision duration acquisition unit 111. Here, the first evaluation information is generated such that the longer the provision duration J12, the higher the score.
(b) When the scent-presentation-information output system 100 includes the second-evaluation-information generation unit 120, the second-evaluation-information generation unit 120 generates the second evaluation information based on the feedback information acquired by the feedback information acquisition unit 121. Specifically, the scent-presentation-information output system 100 further includes the reaction information reception unit 122, and the reaction information reception unit 122 receives input of reaction information indicating a reaction to the scent from the user 5 (for example, pressing of an icon such as "like", "love", or "bad"). The feedback information acquisition unit 121 then acquires the feedback information by analyzing the reaction information. Note that the reaction information reception unit 122 may receive the provision duration J12 for which the scent is provided to the user 5. Such a configuration enables the second evaluation information to be generated in accordance with the length of the provision duration J12. The feedback information acquisition unit 121 may acquire the feedback information by analyzing the sound information of the space S. Such a configuration enables the second evaluation information to be generated based on a conversation or the like of the user 5. In addition, the feedback information acquisition unit 121 may acquire the feedback information by analyzing the facial expression of the user 5 depicted in a captured image of the space S. Such a configuration enables the second evaluation information to be generated based on the facial expression of the user 5.
(c) When the scent-presentation-information output system 100 includes the third-evaluation-information generation unit 130, the third-evaluation-information generation unit 130 generates the third evaluation information, based on the sales information. Note that the scent-presentation-information output system 100 may include the user identification unit 132 that identifies the user 5, based on the user identification information J03. Such a configuration enables the user 5 to whom the scent is provided to be identified.
(d) When the scent-presentation-information output system 100 includes the fourth-evaluation-information generation unit 140, the fourth-evaluation-information generation unit 140 generates the fourth evaluation information, based on the use purpose J13 and the effect J14 that are received by the use information reception unit 141. Such a configuration enables information regarding a scent to be generated which is highly likely to be effective for the user 5 according to the use purpose.

### (3-5)

In addition, the scent-presentation-information output system 100 is coupled to the scent dispenser 200 that contains a plurality of fragrances and is capable of generating a scent using one fragrance or a plurality of fragrances. The scent-provision-information acquisition unit 102 then acquires the scent evaluation information J02 via the scent dispenser 200. Such a configuration enables various kinds of scents to be provided via the scent dispenser 200 and enables information for outputting the scent presentation information to be acquired via the scent dispenser 200.

In addition, since the scent dispenser 200 includes the input reception unit 201, information for generating the scent provision information J can be input to the scent-presentation-information output system 100 via the scent dispenser 200. The scent dispenser 200 may also receive input of the information for generating the scent provision information J via the terminal apparatus 50 (such as a smartphone) associated with the user 5.

In the scent-presentation-information output system 100, the reaction information reception unit 122 described above may receive input of the reaction information via the terminal apparatus 50 associated with the user 5. Such a configuration enables the reaction information to be input via the terminal apparatus 50.

### (3-6)

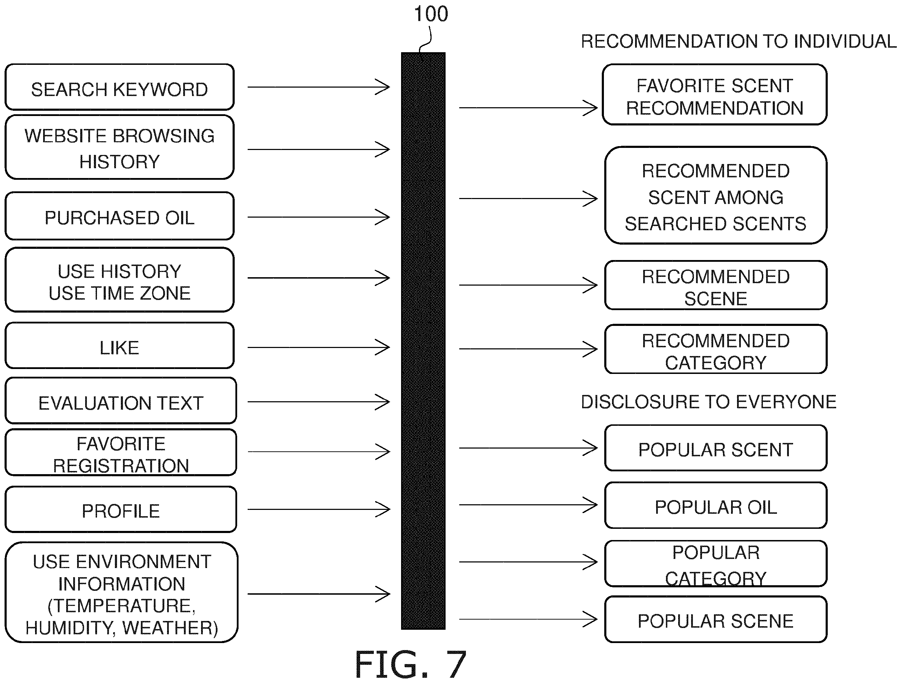

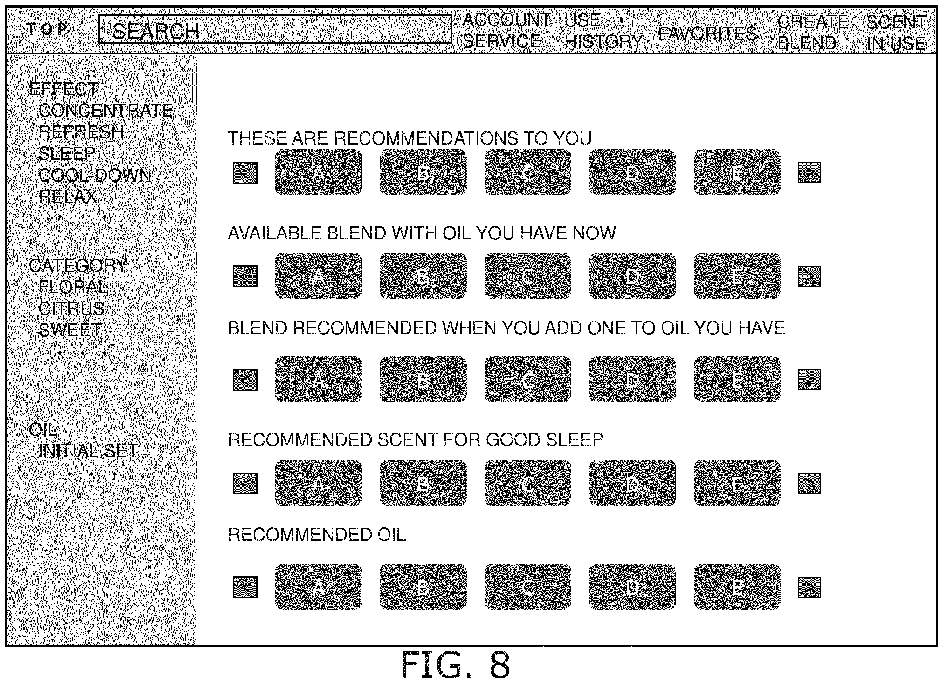

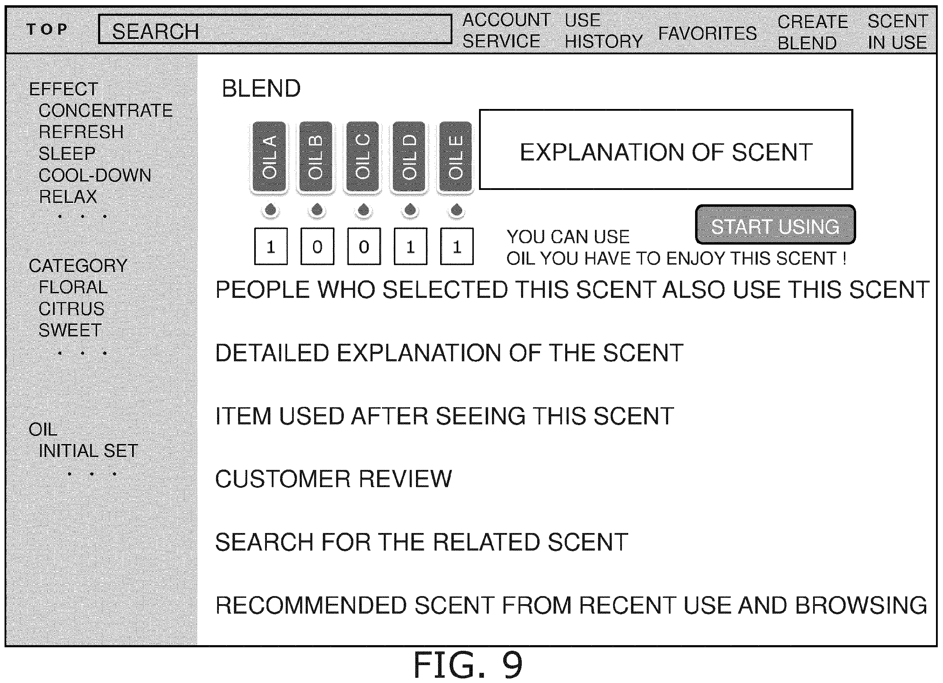

As described above, the scent-presentation-information output system 100 according to the present embodiment clusters the user 5 based on the scent provision information, and outputs the scent presentation information to the user 5 having undergone clustering. At the time of clustering, any of or any combination of pieces of information as illustrated in Fig. 7 may be further added as the scent provision information J. That is, pieces of information such as a search keyword regarding scent, a browsing history of websites on which information regarding scent is posted, a purchase history of fragrance oil, a use mode, a use time zone, reaction information, an evaluation text (comment), presence or absence of registration, as favorites, of websites on which information regarding scent is posted, a profile of the user 5, and use environment information (temperature, humidity, or weather) may be added. Then, clustering is performed on the user 5 using these pieces of information as well. This enables further optimized scent presentation information to be generated. Specifically, information regarding a scent recommended to each user 5 (= favorite scent recommendation), information on a scent recommended from the scent information that has been browsed, information on a recommended use scene of a scent (= recommended scene), and information on a recommended scent category (= recommended category) (for example, floral, citrus, and sweet scent) can be output as the scent presentation information. In addition to the information on the scent recommended to each user, information on a popular scent, information on popular oil, information on a popular category, information on a popular use scene, and the like can also be output based on the use information of all the users 5. Specifically, display information as illustrated in Figs. 8 and 9 is generated by the scent-presentation-information generation unit 104. Herein, pieces of information such as "These are recommendations to you", "Available blend with oil you have now", "Blend recommended when you add one to oil you have", "Recommended scent for good sleep", and "Recommended Oil" are displayed on the terminal apparatus 50 of the user 5 as the information on the scent recommended to each user (Fig. 8). In addition, based on the use information of all the users 5, pieces of information such as "People who selected this scent also use this scent", "Detailed explanation of the scent", "Item used after seeing this scent", "Customer review", "Search for the related scent", "Recommended scent from recent use and browsing" are displayed on the terminal apparatus 50 of the user 5 (Fig. 9).

### <Other Embodiments>

While the embodiment has been described above, it should be understood that various modifications can be made on the configurations and details without departing from the gist and the scope of the claims.

That is, the present disclosure is not limited to the above-described embodiment as it is. The present disclosure can be embodied by modifying the constituent elements within a scope not departing from the gist thereof in the implementation stage. In addition, the present disclosure can form various disclosures through appropriate combinations of a plurality of constituent elements disclosed in each embodiment described above. For example, some constituent elements may be omitted from among all the constituent elements described in the embodiment. Furthermore, constituent elements may be appropriately combined in different embodiments.

### Reference Signs List

- 5: user
- 50: terminal apparatus
- 100: scent-presentation-information output system
- 101: scent-provision-information storage unit
- 102: scent-provision-information acquisition unit
- 103: clustering unit
- 104: scent-presentation-information generation unit
- 105: scent-presentation-information output unit
- 110: first-evaluation-information generation unit
- 111: provision duration acquisition unit
- 120: second-evaluation-information generation unit
- 121: feedback information acquisition unit
- 122: reaction information reception unit
- 130: third-evaluation-information generation unit
- 131: sales information storage unit
- 132: user identification unit
- 140: fourth-evaluation-information generation unit
- 141: use information reception unit
- 200: scent dispenser
- 201: input reception unit
- 301: sound recording apparatus
- 302: image-capturing apparatus
- J: scent provision information
- J01: scent identification information
- J02: scent evaluation information
- J03: user identification information
- J12: provision duration
- J20: sales information
- J21: sales number
- J22: purchase date and time
- K: scent change information
- S: space

### Citation List

### Patent Literature

PTL 1: Japanese Unexamined Patent Application Publication No. 2017-33226

## Claims

1. A scent-presentation-information output system (100) comprising:
a scent-provision-information storage unit (101) that stores, as scent provision information (J), scent identification information (J01) for identifying a scent provided to a user (5), scent evaluation information (J02) indicating an evaluation of the scent by the user, and user identification information (J03) for identifying the user in association with one another;
a scent-provision-information acquisition unit (102) that acquires the scent provision information;
a clustering unit (103) that classifies, based on the scent provision information, the user into a predetermined cluster;
a scent-presentation-information generation unit (104) that generates, based on pieces of scent provision information of all or other users who belong to the cluster, scent presentation information for presenting a scent recommended to the user; and
a scent-presentation-information output unit (105) that outputs the scent presentation information in a form suitable for an output destination.

2. The scent-presentation-information output system according to claim 1,
wherein the scent evaluation information includes first evaluation information, and
wherein the scent-presentation-information output system further comprises:
a provision duration acquisition unit (111) that acquires a provision duration for which the scent is provided; and
a first-evaluation-information generation unit (110) that generates, based on the provision duration, the first evaluation information.

3. The scent-presentation-information output system according to claim 1 or 2, further comprising:
a provision duration acquisition unit (111) that acquires a provision duration for which the scent is provided,
wherein the clustering unit classifies, based on the provision duration, the user into a predetermined cluster.

4. The scent-presentation-information output system according to any one of claims 1 to 3,
wherein the scent presentation information includes a recommended use duration of the scent recommended to the user.

5. The scent-presentation-information output system according to any one of claims 1 to 4, further comprising:
a scent-change-information extraction unit (106) that extracts, from the scent-provision-information storage unit, based on the scent identification information and the user identification information, scent change information (K) indicating a change in the scent provided to the user in a continuous time series,
wherein the clustering unit classifies, based on the scent change information, the user into a predetermined cluster, and
wherein the scent-presentation-information generation unit generates the scent presentation information including information on a change in a scent in a continuous time series.

6. The scent-presentation-information output system according to any one of claims 1 to 5,
wherein the scent-presentation-information output system is coupled to a scent dispenser (200) that contains a plurality of fragrances and that is capable of generating a scent using one fragrance or a plurality of fragrances, and
wherein the scent-provision-information acquisition unit acquires, based on information transmitted from the scent dispenser, the scent provision information.

7. The scent-presentation-information output system according to claim 6,
wherein the scent dispenser includes an input reception unit (201) that receives input of information for generating the scent provision information.

8. The scent-presentation-information output system according to claim 7,
wherein the scent dispenser receives input of the information for generating the scent provision information via a terminal apparatus (50) associated with the user.

9. The scent-presentation-information output system according to any one of claims 1 to 8,
wherein the scent evaluation information includes second evaluation information, and
wherein the scent-presentation-information output system further comprises:
a feedback information acquisition unit (121) that acquires feedback information indicating feedback on the scent provided to the user; and
a second-evaluation-information generation unit (120) that generates, based on the feedback information, the second evaluation information.

10. The scent-presentation-information output system according to claim 9, further comprising:
a reaction information reception unit (122) that receives, from the user, input of reaction information indicating a reaction to the scent,
wherein the feedback information acquisition unit acquires the feedback information by analyzing the reaction information.

11. The scent-presentation-information output system according to claim 10,
wherein the reaction information reception unit receives a provision duration for which the scent is provided to the user.

12. The scent-presentation-information output system according to claim 10 or 11,
wherein the reaction information reception unit receives input of the reaction information via a terminal apparatus associated with the user.

13. The scent-presentation-information output system according to any one of claims 9 to 12,
wherein the scent-presentation-information output system is coupled to a sound recording apparatus (301) that records sound information of a space (S) to which the scent is provided, and
wherein the feedback information acquisition unit acquires the feedback information by analyzing the sound information of the space.

14. The scent-presentation-information output system according to any one of claims 9 to 13,
wherein the scent-presentation-information output system is coupled to an image-capturing apparatus (302) that captures an image of a space (S) to which the scent is provided, and
wherein the feedback information acquisition unit acquires the feedback information by analyzing a facial expression of the user depicted in the captured image of the space.

15. The scent-presentation-information output system according to any one of claims 1 to 14,
wherein the scent evaluation information includes third evaluation information, and
wherein the scent-presentation-information output system further comprises:
a sales information storage unit (131) that stores sales information of a fragrance from which the scent is generated; and
a third-evaluation-information generation unit (130) that generates, based on the sales information, the third evaluation information.

16. The scent-presentation-information output system according to any one of claims 1 to 15, further comprising:
a user identification unit (132) that identifies the user based on the user identification information.

17. The scent-presentation-information output system according to any one of claims 1 to 16,
wherein the scent evaluation information includes fourth evaluation information, and
wherein the scent-presentation-information output system further comprises:
a use information reception unit (141) that receives, from the user, input of a use purpose (J13) of the scent and an effect (J14) for the use purpose; and
a fourth-evaluation-information generation unit (140) that generates, based on the use purpose and the effect, the fourth evaluation information.
